# FASCICULE DE BREVET EUROPEEN

(11) **EP 0 575 271 B1**
(45) Date de publication et mention de la délivrance du brevet: **08.10.1997**
(21) Numéro de dépôt: 93420249.0
(22) Date de dépôt: 15.06.1993
(51) Int. Cl.: H05B 7/14

(54) **Joint de raccordement d'électrodes de four électrique**
Elektrodenverbindung bei elektrischen Öfen
Electrode nipple for electric furnace

(30) Priorité: 18.06.1992 FR 9207990
(43) Date de publication de la demande: 22.12.1993
(73) Titulaire: SGL CARBON S.A., 74190 Le Fayet (FR)
(72) Inventeur: Tahon, Bernard, F-74190 Passy (FR); Beghein, Philippe, F-74190 Passy (FR)
(74) Mandataire: Séraphin, Léon

(56) Documents cités:
- FR-A- 1 380 545
- US-A- 3 140 967
- US-A- 3 322 446
- US-A- 4 624 984

## Description

### DOMAINE TECHNIQUE

L'invention concerne un joint pour le raccordement bout à bout et de façon rigide et fixe d'électrodes consommables en graphite ou en carbone utilisées dans les fours électriques.

### ETAT DE LA TECHNIQUE

Les électrodes en carbone ou en graphite des fours électriques notamment des fours à arc sont consommées lors de l'utilisation et leur remplacement se fait au fur et à mesure de leur consommation par raccordement d'un nouveau tronçon d'électrode au tronçon précédent. Ces tronçons comportent à leurs extrémités des manchons filetés intérieurement dans lesquels est vissé un raccord à double filetage conique ou nipple également en graphite ou en carbone. L'espace vide entre les filets adjacents du nipple et des manchons est généralement rempli par un ciment de préférence bon conducteur du courant électrique. Cet ensemble constitue le joint d'électrode qui doit donc assurer une liaison mécanique et électrique efficace et permanente entre chaque tronçon d'électrode.

En fait, ce joint est soumis en cours d'utilisation à de nombreuses contraintes mécaniques et thermiques pouvant provoquer des incidents très préjudiciables à la bonne marche du four comme le desserrage, voire même la rupture de l'assemblage vissé manchon/nipple. Ainsi le joint doit être en mesure de résister aux vibrations et chocs mécaniques provoqués par la mise en court-circuit de l'arc électrique ou simplement par certaines manoeuvres lors des chargements de four et des coulées de métal, mais également aux contraintes thermiques conduisant en cours d'utilisation à une dilatation différente des éléments carbonés constituant le joint. Ces contraintes peuvent être amplifiées par l'apparition au niveau des nipple/manchon de zones de mauvais contact, voire de non contact, où la résistivité augmente entraînant localement un suréchauffement du joint par effet Joule.

Des progrès significatifs ont été réalisés avec l'emploi de joints d'électrodes comportant systématiquement comme masse de remplissage un ciment à base de produits carbonés dont les caractéristiques physoco-chimiques sont adaptées au cycle thermique auquel est soumis le joint afin de conserver une liaison mécanique et électrique efficace et permanente entre chaque tronçon d'électrode. Quant au remplissage de l'entrefilet nipple/manchon par le ciment, l'une des techniques la plus fréquemment employée consiste à introduire le ciment carboné solide à la température ambiante dans des évidements pratiqués dans le nipple faisant office de réservoirs. Le ciment carboné, qui est une composition liante le plus souvent à base de brai, est déposé dans les réservoirs du nipple avant assemblage avec les manchons d'électrode. Le joint ainsi formé entre 2 tronçons d'électrode s'échauffe rapidement en progressant vers le brai en fusion ce qui provoque le ramollissement puis l'écoulement du ciment du réservoir vers les espaces restés libres entre les fletages nipple/manchon où le ciment durcit avant d'être cokéfié à partir de 400°C et jusqu'à 800°C pour former un dépôt adhérent aux parois des filets assurant ainsi une liaison mécanique et électrique permanente.

Les joints du type à réservoir existent en plusieurs variantes de réalisation qui ont fait l'objet de nombreux brevets notamment US 2510230, US 2828162 et US 3419296. Quant aux ciments les plus couramment utilisés avec ce type de joint, ce sont des compositions liantes à base de brai incorporant des liants organiques cokéfiables mais visqueux à basse température, tels que goudron, poix, résine synthétique selon US 3055789 (FR 1230258) ou tels que dextrine, résine synthétique thermodurcissable selon US 3624011 (FR 1485912). Ces compositions liantes permettent d'une part de régulariser la séquence de répartition du brai plastique dont la viscosité peut varier entre 100°C et 200°C dans des proportions très importantes et d'autre part de favoriser par la présence d'une résine thermodurcissable la solidification du ciment dès 200 ou 300°C. En fait la présence d'une matière thermodurcissable gêne déjà l'écoulement du ciment et donc sa bonne répartition dans la zone de température prévue à cet effet, c'est-à-dire 100 à 200°C.

Ce problème de répartition semble avoir été résolu par l'emploi de nouvelles compositions à base de résines thermodurcissables et cokéfiables ou de brai, incorporant un agent d'addition destiné à favoriser l'expansion du ciment, lors du chauffage et donc à faciliter sa répartition dans l'entrefilet dès 100°C.

Ainsi FR-A-1380545 et US 3322446 mettent en oeuvre un matériau thermodurcissable, cokéfiable et expansible en volume lorsqu'on élève la température, comme par exemple une résine phénolique, associé d'une part à une charge pulvérulente de carbure de silicium ou de coke pour améliorer le processus de cokéfaction et d'autre part à une matière organique telle que l'hexaméthylène tétramine ou le porophore susceptible d'amplifier l'effet de gonflement du ciment avec la température. De même US 3976496 (FR 2204673) préconise l'emploi d'un ciment pâteux de brai particulaire dilué dans le liant à base de sulfonate de lignine dont les propriétés de moussage après humidification et chauffage au-delà de 100°C sont connues. Enfin EP-A-0260529 décrit un joint d'électrode dont le ciment est constitué en majeure partie de brai additionné d'une quantité mineure d'un agent moussant choisi dans le groupe du soufre, de la 2,4 dinitro-aniline, des huiles clarifiées nitrées. Dans ce dernier cas l'agent moussant présente le double avantage de favoriser la répartition du ciment entre les filetages en abaissant notamment la température de début de ramollissement du brai et d'augmenter significativement la vitesse de cokéfaction du brai à partir de 350°C.

Ces types de joint ne sont en revanche plus adaptés pour les électrodes de four électrique utiisant les nouvelles techniques de protection contre l'oxydation consistant à refroidir le plus possible les électrodes notamment par pulvérisation d'eau et éventuellement à déposer une couche protectrice antioxydante à leur surface par pulvérisation d'une solution aqueuse d'un sel approprié par exemple de phosphate d'aluminium (EP-A-0334007) dans la zone comprise entre les pinces de contact des électrodes et la fermeture du four. Dans ce cas le cycle d'échauffement des électrodes et par suite celui des joints est complètement modifié de sorte que les joints à réservoir mettant en oeuvre les ciments de l'art antérieur comme masse de remplissage ne sont plus en mesure d'assurer correctement une liaison mécanique et électrique efficace et permanente entre chaque tronçon d'électrode. Plus précisément le maintien prolongé (5 à 10 heures) des électrodes à des températures comprises entre 150 et 250°C suivi d'une montée rapide à des températures supérieures à 500°C au passage d'électrode à travers la fermeture du four, ne permettent pas avec les seuls ciments à base de brai d'obtenir un durcissement suffisamment rapide avant 500°C, de sorte que les risques de desserrage et d'échauffement anormal du joint deviennent importants.

### PROBLEME POSE

Il s'est donc avéré nécessaire de mettre au point un type de joint à réservoir en mesure d'assurer une liaison électrique et mécanique permanente et efficace entre les électrodes refroidies lors de leur utilisation et donc soumises à un nouveau cycle thermique impliquant l'emploi d'un nouveau ciment combinant un grand nombre de propriétés physico-chimiques, à savoir :
- stabilité à l'état solide jusqu'à au moins 60°C pour être conservé dans les réservoirs du nipple quels que soient le délai d'utilisation et les conditions climatiques
- fusion entre 90°C et 120°C avec abaissement de la viscosité à moins de 2500 cP suivie d'une solidification rapide avec durcissement entre 120 et 150°C
- enfin bonne stabilité thermique jusqu'à au moins 400°C début de la cokéfaction avec conservation d'un taux de carbone fixe d'au moins 50% assurant une bonne liaison mécanique et électrique de la jonction même après cokéfaction et jusqu'à 800°C.

### OBJET DE L'INVENTION

Compte tenu de la difficulté voire de la quasi impossibilité de trouver un nouveau ciment pour joint à réservoir présentant l'ensemble des caractéristiques physico-chimiques requises pour résister aux contraintes auxquelles sont soumis les joints au cours du nouveau cycle thermique pour électrode refroidie, la demanderesse après avoir expérimenté sans succès un ciment obtenu par mélange intime d'un ciment à base de brai de l'art antérieur avec une résine thermodurcissable à moins de 200°C, a mis au point un joint contenant séparément dans des réservoirs ménagés dans le nipple, d'une part un ciment à base de brai selon l'art antérieur donc apte à assurer une liaison mécanique et électrique satisfaisante entre chaque tronçon d'électrode au-delà de 400°C, d'autre part un ciment fusible et thermodurcissable à basse température en mesure de répondre aux contraintes imposées par le nouveau cycle thermique de l'ambiante jusqu'à 500°C. Ainsi, un tel joint mixte assure un collage efficace à toute température jusqu'à environ 800°C, température de l'électrode à proximité de la charge.

II est évident que dans les cas particuliers où la température maximale de collage requise n'excède pas 500°C, il y a avantage à augmenter le nombre des réservoirs remplis par le ciment fusible et thermodurcissable à basse température au détriment des réservoirs remplis par le ciment à base de brai, à n'utiliser que du ciment fusible et thermodurcissable à basse température.

Plus précisément l'invention concerne un joint pour le raccordement bout à bout de façon rigide et fixe des électrodes en graphite ou en carbone dont les extrémités comportent un manchon avec un filetage intérieur dans lequel est vissé un raccord à double filetage, ou nipple, percé de trous faisant office de réservoirs contenant un ciment solide et électriquement conducteur constitué par un matériau thermodurcissable, cokéfiable, expansible en volume lorsqu'on élève la température et contenant un agent susceptible de favoriser encore par dégagement gazeux à une certaine température l'expansion du ciment entre les filetages du nipple et des manchons, caractérisé en ce que lesdits réservoirs au nombre d'au moins 4, constitués par des trous borgnes percés radialement dans le nipple selon des axes perpendiculaires à son axe de symétrie et dans ses parties tronçoniques de plus faible section, sont remplis séparément et alternativement par un ciment à base de brai mélangé à un agent moussant et par un ciment synthétique constitué par une résine thermodurcissable qui, en présence d'un catalyseur, fond à une température supérieure à 60°C pour former une phase liquide de viscosité inférieure à 2500 centipoises entre 90°C et 120°C et se polymériser à une température supérieure ou égale à 120°C.

Après de nombreux essais d'agents de collage carbones, les plus adaptés se sont avérés être les résines phénoliques à bas poids moléculaire dont le point de fusion devient supérieur à 60°C après addition d'hexamine (hexaméthylène tétramine (CH₂)₆ N₄) comme catalyseur de polymérisation dans la proportion de 1 à 20% et de préférence de 8 à 12% du poids de résine. On obtient ainsi le meilleur compromis entre fluidité dans la plage de température de 90°C à 120°C où doit se réaliser la répartition de l'agent de collage, et durcissement par polymérisation dans la plage de température 120°C à 150°C où doit s'effectuer le durcissement du ciment.

Ainsi, dans la plage de température 90-120°C de fusion du mélange et de préférence entre 100 et 110°C, la viscosité doit être inférieure à 2500 cP et de préférence inférieure à 500 cP afin d'obtenir une vitesse d'écoulement et une répartition suffisantes de la résine catalysée placée dans les réservoirs vers les espaces libres entre les filetages nipple/manchon avant que ne se produise à partir de 120°C et jusqu'à 150°C, mais de préférence entre 120 et 140°C, le durcissement par polymérisation de la résine phénolique. On constate d'une part que la quantité de catalyseur agit évidemment sur la vitesse de polymérisation mais n'a pratiquement pas d'incidence sur la température de début de polymérisation, d'autre part qu'avec des additions de 8 à 12% en poids de catalyseur à la résine, la vitesse de durcissement est maximale se traduisant par une polymérisation totale après seulement ½ heure de chauffage à 130°C. On note enfin que dans la plage de température 150-400°C, où les ciments à base de brai s'avèrent peu efficaces, la stabilité de la résine phénolique polymérisée est très grande, à la différence de nombreuses autres résines thermodurcissables à base de carbone, se traduisant d'ailleurs par des températures de décomposition et de cokéfaction voisines de 400°C et par un taux de carbone fixe contrôlé par thermogravimétrie supérieur à 55% voire même à 60% dans les conditions optimales d'addition de 8 à 12% d'hexamine. Ainsi des tests d'efficacité et de stabilité du collage consistant à séparer à l'étau des plaques de graphite décalées l'une par rapport à l'autre, mais collées dans leur partie jointive par du ciment organique selon l'invention contenant 12% d'hexamine chauffé ½ heure à 130°C, a montré que les plaques étaient inséparables après chauffage successivement à 140-170-200-400 et 450°C, le décollage étant obtenu seulement à 500°C, le collage devenant nul à 600°C.

### MISE EN OEUVRE DE L'INVENTION

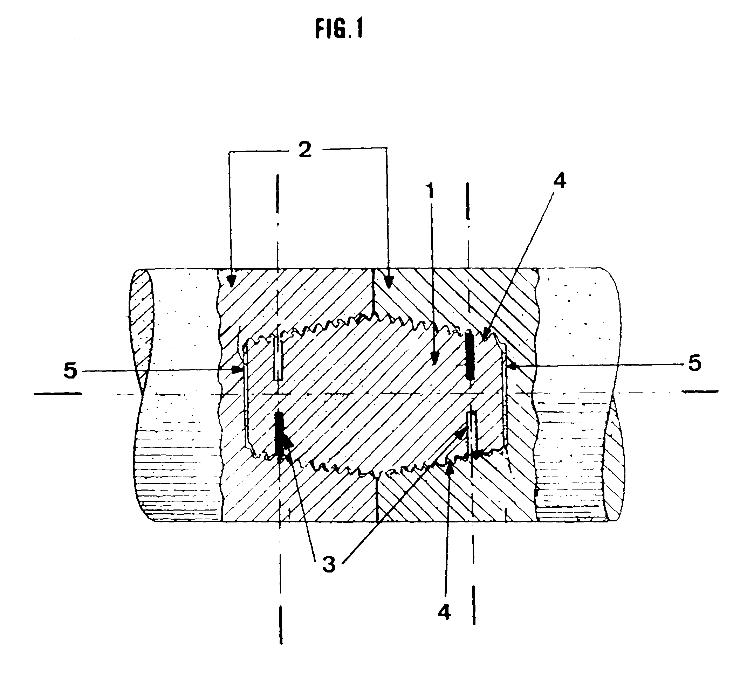

L'invention sera mieux comprise par la description détaillée de sa mise en oeuvre s'appuyant sur la figure 1 qui représente une coupe longitudinale du joint selon le plan passant par l'axe de symétrie du joint et par les axes de perçage des trous borgnes faisant office de réservoirs.

On réalise un prémélange de la résine phénolique à bas poids moléculaire avec le catalyseur d'hexamine à l'état pulvérulent (granulométrie 90% en poids inférieure à 75 µm et au plus 1% de refus à 150 µm) introduit progressivement à raison de 8 à 12% du poids de résine chauffé à une température d'au moins 90°C mais n'excédant pas de préférence 110°C. Le mélange liquide homogène une fois réalisé est refroidi puis coulé sous forme de bâtonnets cylindriques qui après solidification sont placés dans les réservoirs 3 du nipple 1 représenté à la figure 1, et cela en alternance avec des bâtonnets en ciment de composition connue à base de brai mélangé à du soufre (15 à 20% en poids). Les réservoirs, généralement au nombre de 4 au moins, sont des trous borgnes percés radialement dans le nipple selon des axes perpendiculaires à l'axe de symétrie du nipple dans ses parties tronconiques de plus faible section de sorte qu'au moment de la fusion, le ciment liquide peut non seulement se répartir par gravité dans les espaces restés vides entre les filetages 4, mais également remonter dans les espaces libres ou jeux 5 ménagés volontairement entre le nipple et les manchons 2 et cela par suite d'un effet d'expansion consécutif au léger dégagement gazeux accompagnant la réaction de polymérisation dès 130°C.

Comme représenté sur la figure 1 les trous borgnes sont percés 2 à 2 en vis à vis selon le même axe, les axes de perçage étant eux-mêmes dans le plan passant par l'axe de symétrie du joint. Cette configuration préférée de réalisation peut néanmoins être modifiée et comporter par exemple des axes de perçage distincts pour chaque trou, ces axes de perçage tout en restant perpendiculaires à l'axe de symétrie pouvant se trouver eux-mêmes dans des plans distincts.

Dès sa mise en service réalisée par le raccordement d'une nouvelle électrode, le joint est soumis au cycle thermique suivi par les électrodes refroidies et de ce fait il est porté assez rapidement (1 à 2 heures) à une température comprise entre 150 et 250°C pour être ensuite maintenu pendant plusieurs heures dans cet intervalle de température avant d'être porté à nouveau rapidement à plus de 500°C lors de l'approche de la couverture du bain, puis à 800°C voire à 900°C à proximité de la charge en fusion. Ce cycle thermique particulier aux électrodes refroidies est réalisé sans altération et donc sans défaillance du joint mixte combinant selon l'invention l'utilisation d'un ciment connu à base de brai avec un ciment synthétique thermodurcissable à basse température dont les performances industrielles sont concrétisées par la série d'exemples d'application suivants concernant des joints nipples à réservoirs pour le raccordement d'électrode en graphite de diamètre 600 mm pour four à arc.

### Exemple 1 (Art antérieur sans ciment)

Les joints nipplés sont assemblés sans ciment et soumis à un couple de serrage à froid de 1275 Nm.
- après chauffage de 1 heure à 140°C, le couple nécessaire au desserrage est de 2304 Nm.
- après chauffage de 1 heure à 600°C, le couple nécessaire au desserrage est quasiment nul.

### Exemple 2 (Art antérieur avec ciment)

Les joints nipplés sont assemblés uniquement avec du ciment à base de brai mastic soufre de l'art antérieur précédemment décrits et soumis au même couple de serrage à froid de 1275 Nm de l'Exemple I.
- après chauffage de 1 heure à 140°C le couple nécessaire au desserrage est de 2470 Nm
- après chauffage de 1 heure à 600°C le couple nécessaire au desserrage est supérieur à 6180 Nm, c'est-à-dire supérieur aux possibilités du banc d'essai.

### Exemple 3

Les joints nipples sont assemblés uniquement avec du ciment synthétique à base de résine phénolique R 333^{(R)} à bas poids moléculaire, commercialisée par la société BORDEN, mélangée après fusion à 90°C avec 2 % en poids d'hexamine pour former un ciment fondant à 65°C dont la viscosité à 110°C est inférieure à 2000 centipoises et le résidu carboné fixe de l'ordre de 56% et polymérisant à partir de 130°C.
- couple de serrage à froid 1275 Nm identique aux exemples 1 et 2
- après chauffage de 1 heure à 140°C, le couple nécessaire au desserrage est de 5280 Nm
- après chauffage de 1 heure à 600°C, le couple de desserrage est de 1465 Nm.

### Exemple 4

Il reproduit les conditions de l'Exemple 3 avec toutefois un ciment synthétique réalisé par addition à la résine phénolique R333^{(R)} de 9% en poids d'hexamine pour obtenir après fusion à 90°C un ciment fondant à 70°C dont la viscosité à 110°C est inférieure à 500 cP et le résidu carboné fixe de l'ordre de 60% et polymérisant à partir de 130°C
- couple de serrage à froid 1275 Nm identique aux exemples précédents
- après chauffage de 1 heure à 140°C le couple nécessaire au desserrage est supérieur à 6180 Nm, c'est-à-dire supérieur aux possibilités du banc
- après chauffage de 1 heure à 600°C le couple de desserrage est de 1650 Nm.

### Exemple 5

Il reproduit les conditions de l'Exemple 3 avec toutefois un ciment synthétique réalisé par addition à la résine phénolique R333^{(R)} de 12% en poids d'hexamine pour obtenir après fusion à 90°C un ciment fondant à 75°C dont la viscosité à 110°C est inférieure à 250 cP et le résidu carboné supérieur à 60% et polymérisant à partir de 130°C
- couple de serrage à froid 1275 Nm identique aux exemples précédents
- après chauffage de 1 heure à 140°C, le couple nécessaire au desserrage est supérieur à 6180 N, c'est-à-dire supérieur aux possibilités du banc
- après chauffage de 1 heure à 600°C le couple de desserrage est de 1765 Nm.

### Exemple 6

Il reproduit les conditions de mise en oeuvre optimales du joint mixte conforme à l'invention selon lesquelles 2 réservoirs diagonalement opposés sur la figure 1 sont remplis par du ciment synthétique en bâtonnets préparé selon les conditions de l'Exemple 5 (addition de 12% d'hexamine) et les 2 autres réservoirs diagonalement opposés sont remplis par du ciment brai, mastic, soufre selon l'Exemple 2 représentatif de l'art antérieur.
- couple de serrage à froid 1275 Nm identique aux exemples précédents
- après chauffage de 1 heure à 140°C, le couple nécessaire au desserrage est supérieur à 6180 Nm c'est-à-dire supérieur aux possibilités du banc
- après chauffage de 1 heure à 600°C, le couple nécessaire au desserrage est supérieur à 6180 Nm c'est-à-dire supérieur aux possibilités du banc.

Il ressort de cette série d'exemples que le collage réalisé avec du ciment synthétique contenant 8 à 12% d'hexamine est le plus efficace à basse température et cela dès 140°C car la polymérisation est très rapide et que la combinaison de ce ciment synthétique avec du ciment à base de brai de l'art antérieur permet de réaliser un joint mécaniquement et électriquement efficace pendant tout le cycle thermique suivi par les électrodes refroidies. A noter enfin qu'au-delà de 15% en poids, les additions d'hexamine perdent de leur efficacité car l'on constate à partir de 20% une dégradation des caractéristiques du ciment par exemple à diminution des couples de desserrage à basse température.

## Revendications

1. Joint pour le raccordement bout à bout de façon rigide et fixe des électrodes en graphite ou en carbone dont les extrémités comportent un manchon (2) avec un filetage intérieur dans lequel est vissé un raccord à double filetage ou nipple (1) percé de trous faisant office de réservoirs (3) contenant un ciment solide et électriquement conducteur constitué par un matériau thermodurcissable, cokéfiable, expansible en volume lorsqu'on élève la température et contenant un agent susceptible de favoriser encore par dégagement gazeux à une certaine température l'expansion du ciment entre les filetages (4) du nipple (1) et des manchons (2) caractérisé en ce que lesdits réservoirs (3), au nombre d'au moins 4, constitués par des trous borgnes percés radialement dans le nipple selon des axes perpendiculaires à son axe de symétrie et dans ses parties tronconiques de plus faible section, sont remplis séparément et alternativement par un ciment à base de brai mélangé à un agent moussant et par un ciment synthétique constitué par une résine thermodurcissable qui, en présence d'un catalyseur, fond à une température supérieure à 60°C pour former une phase liquide de viscosité inférieure à 2500 centipoises entre 90°C et 120°C et se polymériser à une température supérieure ou égale à 120°C.

2. Joint selon la revendication 1 caractérisé en ce que la résine thermodurcissable du ciment synthétique est une résine phénolique à bas poids moléculaire et le catalyseur de l'hexamine ou hexaméthylène tétramine (CH₂)₆N₄.

3. Joint selon la revendication 2 caractérisé en ce que le pourcentage pondéral d'hexamine rajouté à la résine phénolique est compris entre 1 et 20% et de préférence entre 8 et 12%.

4. Joint selon l'une des revendications 1 à 3 caractérisé en ce que la viscosité du ciment synthétique est de préférence inférieure à 500 centipoises entre 100 et 110°C.

5. Joint selon l'une des revendications 1 à 4 caractérisé en ce que la température de polymérisation du ciment synthétique est de préférence comprise entre 120 et 140°C.

6. Joint selon l'une des revendications 1 à 5 caractérisé en ce que le ciment synthétique a un taux de carbone fixe supérieur à 55% en poids.

7. Joint selon la revendication 1 caractérisé en ce que l'agent moussant mélangé au brai est du soufre à raison de 15 à 20% en poids du ciment.

8. Joint selon la revendication 1 caractérisé en ce que les réservoirs (3) ou trous borgnes sont remplis alternativement par du ciment à base de brai et du ciment synthétique se présentant sous forme de bâtonnets.

## Patentansprüche

1. Dichtung zur endseitigen starren und unlösbaren Verbindung von Graphit- oder Kohleelektroden, deren Enden eine Muffe (2) mit einem Innengewinde aufweisen, in welches ein mit einem Doppelgewinde versehener Stutzen bzw. Nippel (1) mit eingebohrten Löchern geschraubt ist, die als Behälter (3) dienen für einen festen und elektrisch leitenden Zement aus einem wärmehärtbaren, verkokungsfähigen und bei Temperaturerhöhung volumenmäßig dehnbaren Werkstoff und für einen Wirkstoff, der durch Gasabgabe bei einer bestimmten Temperatur die Dehnung des Zements zwischen den Gewinden (4) des Nippels (1) und den Muffen (2) noch fördert, dadurch gekennzeichnet, daß die mindestens vier Behälter (3), welche aus Sacklöchern bestehen, die radial in den Nippel gemäß quer zu seiner Symmetrieachse verlaufenden Achsen und in seine kegelstumpfartigen Teile kleineren Querschnitts gebohrt sind, getrennt und abwechselnd mit einem Pechzement, dem ein Schaummittel beigemengt ist, und mit einem synthetischen Zement aus wärmehärtbarem Harz gefüllt sind, welcher in Präsenz eines Katalysators bei einer Temperatur von über 60°C schmilzt, um eine Flüssigphase mit einer Viskosität von weniger als 2500 Pa s zwischen 90°C und 120°C zu bilden und bei einer Temperatur von größer oder gleich 120° zu polymerisieren.

2. Dichtung nach Anspruch 1, dadurch gekennzeichnet, daß der wärmehärtbare Harz des synthetischen Zements ein Phenolharz mit niedrigem Molekulargewicht und der Katalysator Hexamin bzw. Hexamethylentetramin (CH₂)₆N₄ ist.

3. Dichtung nach Anspruch 2, dadurch gekennzeichnet, daß der Massenanteil von Hexamin, das dem Phenolharz beigemengt ist, 1 bis 20 % und vorzugsweise 8 bis 12 % beträgt.

4. Dichtung nach einem der Ansprüche 1 bis 3, dadurch gekennzeichnet, daß die Viskosität des synthetischen Zements zwischen 100 und 110°C vorzugsweise weniger als 500 Pa s beträgt.

5. Dichtung nach einem der Ansprüche 1 bis 4, dadurch gekennzeichnet, daß die Polymerisationstemperatur des synthetischen Zements vorzugsweise in einem Bereich zwischen 120 und 140°C liegt.

6. Dichtung nach einem der Ansprüche 1 bis 5, dadurch gekennzeichnet, daß der synthetische Zement einen festen Kohlenstoffgehalt mit einem Massenanteil von mehr als 55 % hat.

7. Dichtung nach Anspruch 1, dadurch gekennzeichnet, daß das dem Pech beigemengte Schaummittel Schwefel mit einem Zementmassenanteil von 15 bis 20 % ist.

8. Dichtung nach Anspruch 1, dadurch gekennzeichnet, daß die Behälter (3) bzw. Sacklöcher abwechselnd mit Pechzement und synthetischem Zement in Form von Stäbchen gefüllt sind.

## Claims

1. A joint for rigidly and fixedly connecting in end-to-end relationship electrodes of graphite or carbon, whose ends comprise a socket (2) with an internal screwthread into which is screwed a connector with a double screwthread or nipple (1) pierced with holes acting as reservoirs (3) containing a solid and electrically conductive cement constituted by a cokable thermosetting material which is expansible in volume when the temperature is increased and containing an agent capable as a result of gas being given off at a certain temperature of further promoting the expansion of the cement between the screwthreads (4) of the nipple (1) and of the sockets (2), characterised in that said reservoirs (3), of which there are at least 4, which are constituted by blind holes pierced radially in the nipple along axes perpendicular to its axis of symmetry in its frustoconical portions of smallest section, are filled separately and alternately with a pitch-based cement mixed with a foaming agent, and with a synthetic cement constituted by a thermosetting resin, which, in the presence of a catalyst, melts at a temperature of higher than 60°C to form a liquid phase of a viscosity of lower than 2500 centipoises at between 90°C and 120° and polymerise at a temperature of higher than or equal to 120°C.

2. A joint according to Claim 1, characterised in that the thermosetting resin of the synthetic cement is a phenolic resin of low molecular weight and the catalyst is hexamine or hexamethylenetetramine (CH₂)₆N₄.

3. A joint according to Claim 2, characterised in that the percentage by weight of hexamine added to the phenolic resin is between 1 and 20%, and preferably between 8 and 12%.

4. A joint according to one of Claims 1 to 3, characterised in that the viscosity of the synthetic cement is preferably lower than 500 centipoises between 100 and 110°C.

5. A joint according to one of Claims 1 to 4, characterised in that the polymerisation temperature of the synthetic cement is preferably between 120 and 140°C.

6. A joint according to one of Claims 1 to 5, characterised in that the synthetic cement has a proportion of fixed carbon of greater than 55% by weight.

7. A joint according to Claim 1, characterised in that the foaming agent mixed with the pitch is sulphur at a rate of 15 to 20% by weight of the cement.

8. A joint according to Claim 1, characterised in that the reservoirs (3) or blind holes are filled alternately with pitch-based cement and with synthetic cement which is in the form of small rods.
